# EUROPÄISCHE PATENTSCHRIFT

(11) **EP 1 036 993 B1**
(45) Veröffentlichungstag und Bekanntmachung des Hinweises auf die Patenterteilung: **12.05.2004**
(21) Anmeldenummer: 00105024.4
(22) Anmeldetag: 09.03.2000
(51) Int. Cl.: F24D 12/02, F24D 3/10

(54) **Kaskaden-Heizungsanlage mit zwei oder mehr Heizkesseln**
Cascade heating installation with two or more boilers
Installation de chauffage à cascade avec deux ou plusieures chaudières

(30) Priorität: 18.03.1999 DE 29904945 U; 14.08.1999 DE 29914303 U
(43) Veröffentlichungstag der Anmeldung: 20.09.2000
(73) Patentinhaber: Comfort - Sinusverteiler GmbH & Co. KG, 48493 Wettringen (DE)
(72) Erfinder: Zweers, Wilhelm, 48531 Nordhorn (DE)
(74) Vertreter: Schulze Horn, Kathrin

(56) Entgegenhaltungen:
- DE-A- 4 338 324
- DE-A- 4 407 807
- DE-U- 29 822 781

## Beschreibung

Die vorliegende Erfindung betrifft eine Kaskaden-Heizungsanlage mit zwei oder mehr Heizkesseln, insbesondere hängend montierten Brennwertkesseln, und mit mindestens einem von den Kesseln gespeisten Heizkreis, wobei die Heizungsanlage je einen im wesentlichen horizontal verlaufenden Kesselvorlauf-Sammler und Kesselrücklauf-Verteiler sowie weiterhin eine hydraulische Weiche umfaßt, die einerseits über den Kesselvorlauf-Sammler mit den Vorläufen und über den Kesselrücklauf-Verteiler mit den Rückläufen aller Heizkessel und andererseits mit zumindest je einem Heizkreisvorlauf und Heizkreisrücklauf verbunden ist.

Bislang wurden und werden noch auch mittlere und größere Heizungsanlagen mit einem einzigen Heizkessel mit entsprechend großer Heizleistung und üblicherweise in bodenstehender Bauweise ausgeführt. Mit dem allgemein zunehmenden Umweltschutz- und Energiespar-Bewußtsein vollzieht sich jedoch zur Zeit in dieser Hinsicht ein Wandel. So werden heute für mittlere und größere Heizungsanlagen zunehmend mehrere kleinere Kessel im Leistungsbereich zwischen etwa 20 und knapp unter 100 kW eingesetzt, wobei die Kessel zu einer sogenannten Kaskade zusammengefügt sind. Häufig sind dabei die Heizkessel moderne Brennwertkessel, die hängend montiert werden. Je nach dem aktuellen Heizleistungsbedarf werden mehr oder weniger viele Heizkessel in Betrieb gesetzt; moderne Kessel haben außerdem schon häufig leistungsmodulierbare Brennersysteme, die eine sich nach dem aktuellen Heizleistungsbedarf richtende Leistungsmodulation im Bereich von etwa 40 % bis zu 100 % der maximalen oder Nenn-Heizleistung ermöglichen. Eine solche Kaskaden-Heizungsanlage stellt die benötigte Wärme wirtschaftlich, d.h. insbesondere energiesparend und umweltschonend, zur Verfügung. Außerdem gewährleistet eine Kaskaden-Heizungsanlage mit mehreren Heizkesseln eine hohe Betriebsbereitschaft und -sicherheit.

Weiter ist in diesem Zusammenhang zu beachten, daß es für Heizkessel, insbesondere Brennwertkessel, im Betrieb einen unteren und einen oberen Grenzwert für den Heizwasserdurchsatz gibt, die zur Vermeidung von Kesselschäden nicht unter- bzw. überschritten werden sollten. Außerdem genügen für die Zirkulation auf der Primärseite, d.h. in den Heizkesselkreisen, in der Regel kleinere Wassermengen, als sie auf der Sekundärseite, d.h. in den Heizkreisen mit den zugehörigen Radiatoren oder sonstigen Wärmeverbrauchern, benötigt werden. Damit die Kaskaden-Heizungsanlage unter diesen Randbedingungen einwandfrei funktioniert, ist eine entsprechende geeignete Verrohrung und Ausgestaltung der Strömungsverbindungen erforderlich. Das Zuschneiden, Anpassen und Montieren der erforderlichen Rohrleitungen ist sehr zeit- und arbeitsaufwendig, wodurch lange Arbeitszeiten und entsprechend hohe Lohnkosten entstehen. An sich unerwünschte Rohrkreuzungspunkte und Etagenbogen sind bei dieser konventionellen Herstellung der Verrohrung unumgänglich. In den meisten Fällen führt diese Verrohrung zwischen mehreren Heizkesseln und einem oder mehreren Heizkreisen zu einem unübersichtlichen und unprofessionellen Anlagenbild, wobei durch die Unübersichtlichkeit zusätzlich die Gefahr von Falschanschlüssen besteht und wobei die Anbringung von vorgeschriebenen Mitteln zur Wärmedämmung sehr aufwendig und umständlich wird.

Eine Kaskaden-Heizungsanlage der eingangs genannten Art ist aus der DE 44 07 807 A1 bekannt. Hier wird eine Heizungsanlage mit zwei oder mehr Heizkesseln beschrieben, wobei jeweils die Kesselvorläufe und die Kesselrückläufe durch Rohrleitungen miteinander verbunden sind, von denen dann ein Rohrleitungspaar mit dem Kesselvorlaufanschluß und dem Kesselrücklaufanschluß der hydraulischen Weiche verbunden ist. Über ein weiteres Rohrleitungspaar ist die hydraulische Weiche mit einem Heizkreisverteiler verbunden, der seinerseits über weitere Rohrleitungspaare mit den Verbrauchern, z.B. Heizkörper, verbunden ist. Nachteilig ist bei dieser Heizungsanlage, daß die Kesselvorläufe und die Kesselrückläufe vor Ort durch Rohrleitungen mit der hydraulischen Weiche verbunden werden müssen und daß die hydraulische Weiche und der Heizkreisverteiler als separate Bauteile über ein weiteres Rohrleitungspaar vor Ort miteinander verbunden werden müssen. Dies erfordert eine erhebliche Arbeitszeit und führt zu hohen Arbeitskosten.

Eine teilweise Verringerung des Verrohrungsaufwandes wird erreicht, wenn vorgefertigte Verteiler eingesetzt werden, die zu den zugehörigen Heizkesseln passende Anschlußstutzen aufweisen. Ein solcher Verteiler ist in einer Ausführung als Doppelkammer-Verteiler aus der DE 41 05 812 C2 bekannt. Der Verteiler besitzt hier ein Gehäuse mit zwei nach außen verschlossenen und voneinander getrennten Kammern, wobei das Gehäuse von insgesamt drei sich in Längsrichtung des Gehäuses erstreckenden Gehäuseteilen gebildet ist, die durch sich in Längsrichtung des Gehäuses erstreckende Schweißnähte zu dem Gehäuse miteinander verbunden sind. Wesentlich ist bei diesem Gehäuse, daß die Schweißnähte möglichst weit voneinander entfernt sind, um die thermische Belastung des Gehäuses bei der Herstellung der Schweißnähte möglichst gering zu halten.

Ein weiterer Verteiler ist aus der DE 42 30 226 C2 bekannt. In seiner Ausführung als Verteiler für Heizungsanlagen besitzt dieser eine Vorlauf- und eine Rücklaufkammer in einem gemeinsamen Gehäuse, das mit Anschlußstutzen für mehrere Rohre versehen ist. Das Gehäuse ist im wesentlichen kastenförmig mit einer in der Gebrauchslage waagerecht angeordneten Trennwand zwischen Vorlauf- und Rücklaufkammer ausgebildet. Wesentlich ist bei diesem Verteiler, daß eine der Kammern querschnittlich aus einem geschlossenen Kastenprofil und die andere Kammer querschnittlich aus einem U-Profil gebildet ist, dessen freie Enden mit einer Seite des Kastenprofils verbunden sind. Hierdurch soll der Fertigungsaufwand möglichst niedrig gehalten werden.

Die oben dargelegten Nachteile werden aber auch bei Verwendung dieser bekannten Verteiler nur zum Teil behoben.

Für die vorliegende Erfindung stellt sich deshalb die Aufgabe, eine Kaskaden-Heizungsanlage der eingangs genannten Art zu schaffen, die die dargelegten Nachteile vermeidet und bei der insbesondere reduzierte Fertigungsund Montagezeiten mit niedrigeren Arbeitskosten und ein klares, übersichtliches und professionelles Anlagenbild mit einem geringen Risiko von Anschlußfehlern erreicht werden.

Die Lösung der gestellten Aufgabe gelingt erfindungsgemäß mit einer Kaskaden-Heizungsanlage der eingangs genannten Art, die dadurch gekennzeichnet ist,
- daß der Kesselvorlauf-Sammler und der Kesselrücklauf-Verteiler unmittelbar über- oder neben- oder ineinander unter den Heizkesseln angeordnet sind,
- daß der Sammler und der Verteiler jeweils mit vorbereiteten, für eine Gruppe aus zwei oder mehr Heizkesseln angepaßt plazierten und ausgerichteten Anschlußstutzen zum Anschluß der Heizkesselvorläufe und der Heizkesselrückläufe ausgeführt sind,
- daß die Anschlußstutzen in Form von nach oben weisenden geraden Rohrabschnitten und/oder in Form von zunächst horizontal, vorzugsweise nach hinten, und dann nach oben verlaufenden Rohrbögen ausgeführt sind und
- daß der Sammler und der Verteiler fest mit der hydraulischen Weiche verbunden sind und mit dieser eine vorgefertigte, transportable Bau- und Montageeinheit bilden.

Mit der erfindungsgemäßen Kaskaden-Heizungsanlage wird eine wesentliche Verminderung des Zeit- und Arbeitsaufwandes für die Erstellung der Heizungsanlage vor Ort erreicht. Die Einheit aus Sammler, Verteiler und hydraulischer Weiche kann in einem Fachbetrieb rationell vorgefertigt und mit geringem Aufwand zum Anbringungsort transportiert werden. Dabei können Sammler und Verteiler vorab für gängige Heizkesseltypen und daraus gebildete Mehrkesselanordnungen passend gefertigt werden, so daß der Heizungsanlagenbauer nur noch die passende Einheit auswählen muß, die er für die von ihm zu errichtende Heizungsanlage benötigt. Weiterhin wird vorteilhaft eine sehr klare, übersichtliche und sauber aussehende Konstruktion erreicht, was gleichzeitig die Gefahr von Fehlern bei der Montage und beim Anschluß von Rohrleitungen praktisch auf Null reduziert. Mit der Erfindung wird weiter erreicht, daß die Verbindungen zwischen den Heizkesseln einerseits und Sammler und Verteiler andererseits auf dem kürzestmöglichen Weg erfolgen und daß außerdem der unter den Heizkesseln bei deren hängender Montage vorhandene Freiraum sinnvoll für die Unterbringung von Sammler, Verteiler und Anschlußstutzen genutzt wird. Um Sammler und Verteiler möglichst einfach fertigen zu können und um gleichzeitig eine hohe Eigenstabilität zu erzielen, sind dabei, wie aus den oben zitierten Schriften zum Stand der Technik an sich bekannt, bevorzugt der Sammler und der Verteiler als aufeinanderliegende Rechteckrohre, vorzugsweise mit einer gemeinsamen Mittelwand, ausgeführt. Neben der Einheit selbst können auch dazu passende Dämmstoffkörper in Serie vorgefertigt werden; nach der Montage der Einheit am Aufstellungsort der Heizungsanlage können die Dämmstoffkörper schnell und einfach an der Einheit angebracht werden.

Weiter schlägt die Erfindung vor, daß der Sammler über dem Verteiler liegt und daß Sammler und Verteiler an ihrem einen Stirnende mit der im wesentlichen vertikal ausgerichteten hydraulischen Weiche nahe deren unterem Ende mechanisch fest verbunden sind. Die hydraulische Weiche kann aufgrund ihrer Bauhöhe in der Regel nicht unterhalb der Heizkessel angeordnet werden. Deshalb ist die vorgeschlagene Verbindung zwischen Sammler und Verteiler einerseits und hydraulischer Weiche andererseits besonders zweckmäßig, da hierbei die hydraulische Weiche links oder rechts neben der Heizkesselreihe positioniert wird. Da das erhitzte Vorlauf-Heizwasser aus den Kesseln in den oberen Bereich der hydraulischen Weiche geleitet werden muß und da das abgekühlte Rücklauf-Heizwasser im unteren Bereich der hydraulischen Weiche anfällt, ist die Anordnung des Sammlers über dem Verteiler besonders zweckmäßig, da dann auf den kürzestmöglichen Wegen die benötigte Heizwasserführung erzielbar ist.

In einer konkreten Weiterbildung der zuletzt beschriebenen Ausführung der Heizungsanlage ist vorgesehen, daß der Sammler an oder nahe seinem weichenseitigen Ende über eine feste Verbindungsleitung mit dem oberen Bereich der hydraulischen Weiche in Strömungsverbindung steht und daß der Verteiler an seinem weichenseitigen Ende über eine Durchbrechung in der ihm zugewandten Wandung der hydraulischen Weiche mit deren unterem Bereich in unmittelbarer Strömungsverbindung steht. Vorteilhaft wird damit für die Strömungsverbindung von der hydraulischen Weiche zum Verteiler keinerlei besondere Leitung benötigt.

Die feste Verbindungsleitung vom Sammler zum oberen Bereich der hydraulischen Weiche kann eine freistehende Rohrleitung sein; bevorzugt ist sie aber als integrierter Bestandteil der hydraulischen Weiche ausgeführt, wodurch eine besonders kompakte Bauweise und ein noch aufgeräumteres Erscheinungsbild erreicht werden.

In konkreter Ausgestaltung kann die Verbindungsleitung durch ein mit der dem Sammler zugewandten Seite der Weiche dicht verbundenes, bevorzugt verschweißtes, Rechteckrohr oder U-Profil gebildet sein, dessen Inneres unten über eine Durchbrechung mit dem Sammler und oben über eine weitere Durchbrechung mit dem oberen Bereich der hydraulischen Weiche in Strömungsverbindung steht. Die Verbindungsleitung wird so mit geringstem Material- und Montageaufwand realisiert.

Für die hydraulische Weiche ist weiterhin bevorzugt vorgesehen, daß der daran angeschlossene Heizkreisvorlauf in einem Abstand zwischen etwa 5 und 15 % der Gesamthöhe der hydraulischen Weiche von deren oberem Ende angeordnet ist und daß der an der hydraulischen Weiche angeschlossene Heizkreisrücklauf in einem Abstand von etwa 5 bis 20 % der Gesamthöhe der hydraulischen Weiche von deren unterem Ende beabstandet ist. Auf diese Weise wird im oberen Endbereich der hydraulischen Weiche ein Abscheideraum für im Heizmedium mitgeführte Gas- oder Luftblasen geschaffen. Von dort können die abgeschiedenen Gas- oder Luftmengen über ein an sich bekanntes Entlüftungsventil bedarfsweise oder automatisch abgelassen werden. Im unteren Bereich der hydraulischen Weiche wird auf diese Weise ein Auffangraum für im Heizmedium mitgeführte Schmutzpartikel gebildet, deren Absetzen aufgrund der beim Eintritt des Heizkreis-Rücklaufwassers schlagartig verminderten Strömungsgeschwindigkeit innerhalb der hydraulischen Weiche begünstigt wird. Aus dem unteren Endbereich der hydraulischen Weiche kann der dort abgesetzte Schmutz bedarfsweise durch einen Abschlammhahn abgelassen werden.

Um eine erleichterte und mit möglichst geringem Aufwand verbundene Anpassung der Heizungsanlage an unterschiedliche vorgegebene räumliche Bedingungen zu ermöglichen, sind zweckmäßig zwischen die Sammler- und Verteiler-Anschlußstutzen einerseits und die Vor- und Rückläufe der Heizkessel andererseits zum Höhenausgleich gerade Rohrstücke, vorzugsweise mit Schneidringverschraubungen an ihren Enden, einfügbar.

Wenn in einem Heizungsraum eine ausreichend große Wandfläche für die Anbringung mehrerer Heizkessel nebeneinander vorhanden ist, sind zweckmäßig die Heizkessel Seite an Seite nebeneinander angeordnet und die vertikalen Abschnitte der Anschlußstutzen liegen im wesentlichen in einer gemeinsamen vertikalen Ebene.

Alternativ können, insbesondere wenn keine ausreichend große Wandfläche zur Verfügung steht, ein oder mehrere Paare von Heizkesseln Rücken an Rücken angeordnet und an einem gemeinsamen Träger gehaltert sein, wobei dann die vertikalen Abschnitte der Anschlußstutzen in zwei horizontal voneinander beabstandeten vertikalen Ebenen liegen. Diese Anordnung ist besonders kompakt und kann unabhängig von einer Wandfläche frei innerhalb eines Raumes untergebracht werden. Die Heizkessel sind dann an auf dem Boden stehenden und/oder an der Decke befestigten Trägern gehaltert. Damit bietet diese Ausführung der erfindungsgemäßen Kaskaden-Heizungsanlage auch Lösungsmöglichkeiten für besonders schwierige räumliche Verhältnisse im Heizungsraum, in dem die Heizungsanlage untergebracht werden muß.

Um die Montage der Heizungsanlage weiter zu vereinfachen und zu beschleunigen, wird vorgeschlagen, daß die aus Sammler, Verteiler und hydraulischer Weiche bestehende Bau- und Montageeinheit mit auf einem Boden aufstellbaren Füßen und/oder mit an einer Wand oder Decke anbringbaren Trägern oder mit vorbereiteten Verbindungselementen dafür ausgestattet ist, wobei bevorzugt die Füße und/oder Träger höhen- und/oder längenverstellbar sind. Hierdurch können bauseitig relativ oft auftretende Maßund Lageabweichungen einfach ausgeglichen werden.

Ausführungsbeispiele der Erfindung werden im folgenden anhand einer Zeichnung erläutert. Die Figuren der Zeichnung zeigen:
- Figur 1: eine erste Kaskaden-Heizungsanlage in Frontalansicht,
- Figur 2: die Heizungsanlage aus Figur 1 in Seitenansicht gemäß dem Pfeil II in Figur 1,
- Figur 3: eine zweite Kaskaden-Heizungsanlage, ebenfalls in Frontalansicht,
- Figur 4: die Heizungsanlage aus Figur 3 in Seitenansicht in Richtung des Pfeils IV in Figur 3, und
- Figur 5: die Baueinheit aus Sammler, Verteiler und Weiche als Teil der Heizungsanlage, in einer geänderten Ausführung.

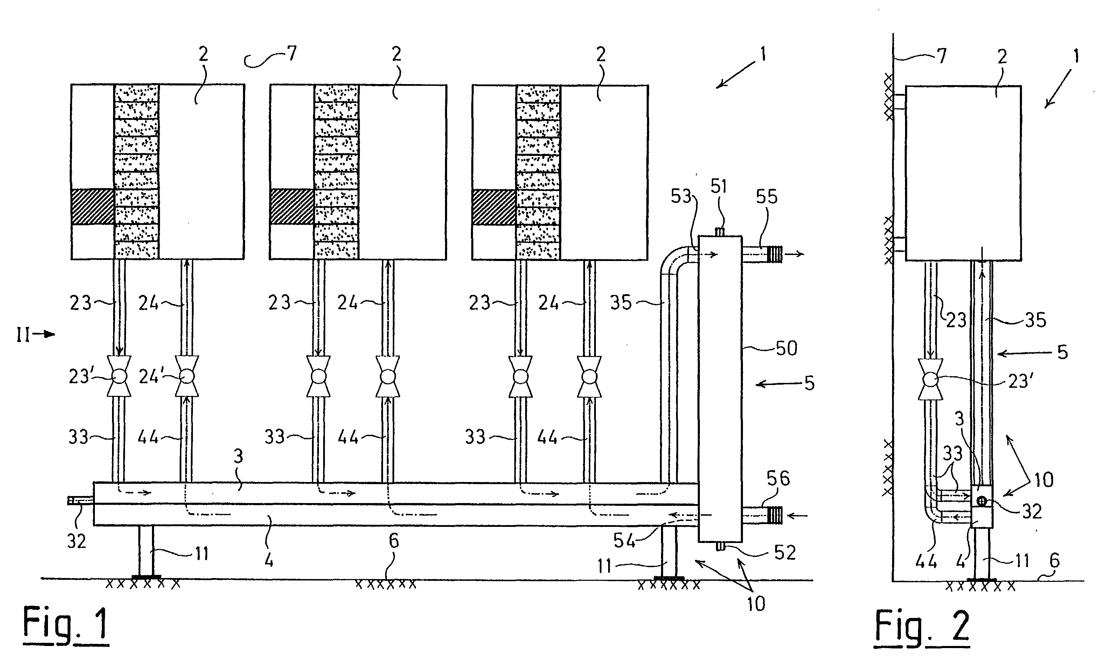

Figur 1 der Zeichnung zeigt ein Beispiel einer Kaskaden-Heizungsanlage 1 mit drei Heizkesseln 2. Die drei Heizkessel 2 sind nebeneinander hängend an einer im Hintergrund liegenden Wand 7 angebracht. Jeder Heizkessel 2 weist einen Vorlauf 23 und einen Rücklauf 24 für das Heizmedium, üblicherweise Wasser, auf.

Unterhalb der drei Heizkessel 2 sind als Einheit zusammengefaßt ein Kesselvorlauf-Sammler 3 und ein Kesselrücklauf-Verteiler 4 angeordnet, die hier jeweils in Form eines Rechteckrohres ausgeführt sind, wobei die beiden Rechteckrohre unmittelbar aufeinanderliegen und in Horizontalrichtung über die gesamte Länge der Anordnung der drei Heizkessel 2 verlaufen. Mit dem Sammler 3 sind auf dessen hier vom Betrachter abgewandter Rückseite drei Anschlußstutzen 33 in Form von zunächst nach hinten und dann nach oben verlaufenden Rohrbögen verbunden. In gleicher Weise sind an der Rückseite des Verteilers 4 drei Anschlußstutzen 44 angeschlossen, die ebenfalls als zunächst nach hinten und dann nach oben verlaufende Rohrbögen ausgeführt sind. Unter Zwischenschaltung je eines Absperrventils 23', 24' sind die Anschlußstutzen 33 mit den Vorläufen 23 und die Anschlußstutzen 44 mit den Rückläufen 24 der Heizkessel 2 verbunden.

Weiterhin umfaßt die Heizungsanlage 1 eine hydraulische Weiche 5, die bei dem dargestellten Ausführungsbeispiel an der rechten Seite der Heizungsanlage 1 angeordnet ist. Die hydraulische Weiche 5 besitzt ein in Vertikalrichtung verlaufendes Gehäuse 50, das in seinem unteren Bereich mechanisch fest mit der Anordnung aus Sammler 3 und Verteiler 4 verbunden, vorzugsweise verschweißt ist. Von dem rechten Endbereich des Sammlers 3 führt eine Verbindungsleitung 35 in Form eines freistehenden Rohrs in den oberen Bereich des Gehäuses 50 der hydraulischen Weiche und mündet über einen Anschlußstutzen 53 in diese ein. Der Verteiler 4 mündet über eine hier nicht sichtbare Durchbrechung 54 in der Wandung des Gehäuses 50 der hydraulischen Weiche 5 unmittelbar in deren unteren Bereich ein. An ihrer in der Zeichnung jeweils rechten Seite besitzt die hydraulische Weiche 5 oben einen Heizkreis-Vorlaufanschluß 55 und unten einen Heizkreis-Rücklaufanschluß 56, die zur Verbindung mit einem oder mehreren Heizkreisen mit Wärmeverbrauchern dienen.

Der Sammler 3 und Verteiler 4 mit ihren Anschlußstutzen 33, 44, die hydraulische Weiche 5 und die Rohrleitung 35 sind zu einer vorgefertigten transportablen Bau- und Montageeinheit 10 zusammengefaßt, was eine rationelle Fertigung in einem Fachbetrieb ermöglicht. Zur Aufstellung der Baueinheit 10 sind am Verteiler 4 unterseitig zwei Füße 11 angebracht, die auf einem Boden 6 aufstellbar sind und das Gewicht der Baueinheit 10 aufnehmen.

Ganz links am Sammler 3 ist ein Entleerungsstutzen 32 erkennbar, der zum bedarfsweisen Ablassen des Heizwassers aus dem Sammler 3 dient und der im Normalfall verschlossen ist. An der hydraulischen Weiche 5 sitzt ganz oben ein Stutzen 51, der beispielsweise einen Temperaturfühler und/oder ein Entlüftungsventil aufnimmt. Zur Bildung eines Luft-Sammelraums im oberen Endbereich der hydraulischen Weiche 5 münden sowohl die Rohrleitung 35 als auch der Heizkreis-Vorlauf 55 in einem gewissen Abstand vom oberen Stirnende der hydraulischen Weiche 5 in diese ein. Je nach dem erwarteten Anfall von abzuscheidender Luft wird dieser Abstand kleiner oder größer gewählt.

Ganz unten an der hydraulischen Weiche 5 ist ein weiterer Stutzen 52 vorgesehen, der ebenfalls im Normalbetrieb verschlossen ist und der zum bedarfsweisen Schlammabzug und zur Entleerung der Weiche 5 dient. Zur Bildung eines Schlamm-Sammelraums im unteren Endbereich der hydraulischen Weiche 5 münden sowohl der Verteiler 4 als auch der Heizkreis-Rücklauf 56 in einem gewissen Abstand vom unteren Stirnende der hydraulischen Weiche 5 in diese ein. Je nach der erwarteten Menge von abzuscheidendem Schlamm wird dieser Abstand kleiner oder größer gewählt.

Im Betrieb der Kaskaden-Heizungsanlage 1 werden je nach momentanem Wärmeleistungsbedarf ein oder zwei oder alle Heizkessel 2 betrieben, wobei vorzugsweise die Heizkessel 2 auch noch mit modulierbaren Brennersystemen ausgeführt sind, so daß auch die Leistung jedes einzelnen Heizkessels 2 noch verändert werden kann. Damit ist ein großes Spektrum an Heizleistungsbedarf sehr wirtschaftlich abdeckbar, was einen kostengünstigen und umweltfreundlichen Heizungsbetrieb gewährleistet. Gleichzeitig ist die Installation der Heizungsanlage 1 unter Verwendung der vorgefertigten Baueinheit 10 sehr einfach und ergibt, wie die Figur 1 augenfällig verdeutlicht, ein sehr übersichtliches und klares Anlagenbild.

Figur 2 der Zeichnung zeigt die Kaskaden-Heizungsanlage 1 aus Figur 1 in einer Seitenansicht gemäß dem Pfeil II in Figur 1. Ganz oben in Figur 2 ist der in Figur 1 ganz linke Heizkessel 2 erkennbar, der an der dahinterliegenden Wand 7 aufgehängt ist. Nahe der Wand 7 verläuft vom Heizkessel 2 dessen Vorlauf 23 nach unten und geht über das Absperrventil 23' in den Anschlußstutzen 33 über, der in den Sammler 3 einmündet. Unterhalb des Sammlers 3 liegt der Verteiler 4, in den der Anschlußstutzen 44 einmündet, der mit dem hier verdeckten Rücklauf des Heizkessels 2 über das entsprechende Absperrventil, das hier ebenfalls verdeckt ist, verbunden ist. Vom Sammler 3 erstreckt sich das Rohr 35 nach oben und mündet in den oberen Bereich der hier durch das Rohr 35 zum größten Teil verdeckten, dahinterliegenden hydraulischen Weiche 5 ein. Wie Figur 2 deutlich zeigt, ist beim dargestellten Ausführungsbeispiel der Heizungsanlage 1 die hydraulische Weiche 5 mit einem Breiten- bzw. Tiefenmaß ausgeführt, das demjenigen des Sammlers 3 und Verteilers 4 entspricht. Hierdurch wird die Fertigung der Baueinheit 10 einfach und kostengünstig gehalten.

Ganz unten in Figur 2 ist einer der Füße 11 sichtbar, mit dem sich die Baueinheit 10 auf dem Boden 6 abstützt. Außerdem ist an der dem Betrachter zugewandten Stirnseite des Sammlers 3 noch der dort vorgesehene Entleerungsstutzen 32 sichtbar.

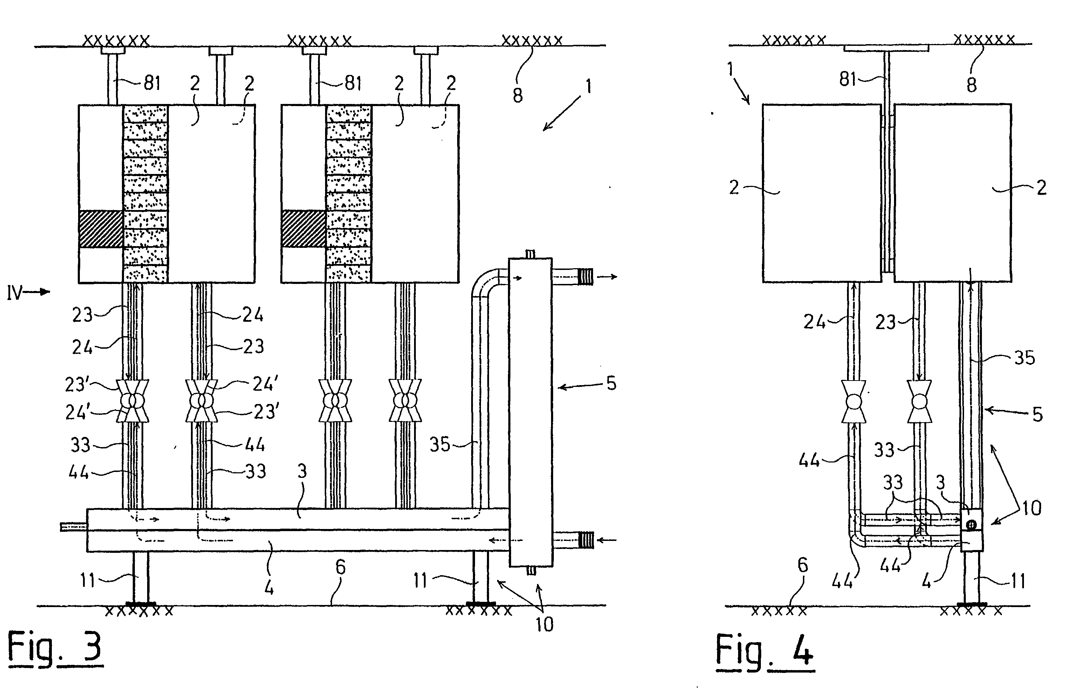

Die Figuren 3 und 4 der Zeichnung zeigen in Frontal- und Seitenansicht eine Kaskaden-Heizungsanlage 1, die insgesamt vier Heizkessel 2 umfaßt und die in Form von zwei Rücken an Rücken angeordneten Paaren von Heizkesseln 2 ausgeführt ist. In Figur 3 sind zwei der vier Heizkessel 2 erkennbar; die beiden weiteren Heizkessel 2 liegen hinter den sichtbaren Heizkesseln 2 und sind durch diese verdeckt. Da hier hinter den Heizkesseln 2 keine Wand zur Montage vorhanden ist, sind die Heizkessel 2 über Träger 81 hängend an einer Decke 8 des Aufstellungsraums der Heizungsanlage 1 gehaltert.

Wie bei den Heizkesseln 2 gemäß dem vorherigen Ausführungsbeispiel nach den Figuren 1 und 2 weist auch hier jeder Heizkessel 2 einen eigenen Vorlauf 23 und Rücklauf 24 auf, so daß diese bei der Heizungsanlage 1 gemäß Figur 3 und 4 jeweils vierfach vorhanden sind. Dementsprechend sind auch jeweils vier Absperrventile 23' auf der Vorlaufseite und jeweils vier Absperrventile 24' auf der Rücklaufseite vorhanden. Unterhalb der Anordnung der Heizkessel 2 ist auch hier wieder ein Sammler 3 und Verteiler 4 vorgesehen, die wieder zu einem übereinanderliegenden Paar von Rechteckrohren zusammengefaßt sind. Da bei dieser Heizungsanlage die Heizkessel 2 nicht nur nebeneinander sondern auch hintereinander angeordnet sind, sind zur passenden Positionierung der Anschlußstutzen 33 und 44 von Sammler 3 und Verteiler 4 relativ zu den Heizkesseln 2 die horizontal verlaufenden Abschnitte der Anschlußstutzen 33, 44 mit zwei unterschiedlichen Längen ausgeführt. Dies wird besonders in der Figur 4 deutlich, wo dies im unteren Teil sichtbar ist. Hiermit wird erreicht, daß auch bei der Anordnung der Heizkessel 2 in Form eines Vierecks nur je ein Sammler 3 und Verteiler 4 benötigt wird.

Wie auch schon bei der Ausführung gemäß den Figuren 1 und 2 sind hier unterhalb des Verteilers 4 zwei Füße 11 vorgesehen, mit denen sich Sammler 3 und Verteiler 4 auf dem Boden 6 abstützen. In gleicher Weise wie auch zuvor schon beschrieben sind Sammler 3 und Verteiler 4 hier mit der rechts in Figur 3 sichtbaren hydraulischen Weiche 5 mechanisch und strömungsmäßig verbunden. Vom Sammler 3 verläuft die Verbindungsleitung 35 als festes freistehendes Rohr in den oberen Bereich der hydraulischen Weiche 5; der Verteiler 4 ist unmittelbar durch die Wandung der hydraulischen Weiche 5 hindurch mit deren unterem Bereich strömungsmäßig verbunden.

Figur 4 verdeutlicht zusätzlich besonders gut die Anordnung von je zwei Heizkesseln 2 Rücken an Rücken, wobei die beiden Heizkessel 2 jedes Paares an einem gemeinsamen Träger 81, der mit der Decke 8 verbunden ist, aufgehängt sind. Von dem in Figur 4 linken Heizkessel 2 ist dem Betrachter dessen Rücklauf 24 zugewandt, während bei dem rechts angeordneten Heizkessel 2 dem Betrachter dessen Vorlauf 23 zugewandt ist. Nach unten hin sind Vorlauf 23 und Rücklauf 24 an die Anschlußstutzen 33 und 44 angeschlossen, die in den Sammler 3 bzw. in den Verteiler 4 münden. Die weiteren Vorläufe und Rückläufe der Heizkessel 2 und die weiteren Anschlußstutzen 33, 34 sind in Figur 4 verdeckt und dadurch nicht sichtbar.

Rechts in Figur 4 ist wieder das Rohr 35 vom Sammler 3 in den oberen Bereich der hydraulischen Weiche 5 sichtbar, wobei die hydraulische Weiche 5 hinter dem Rohr 35 liegt und durch dieses zum größten Teil verdeckt wird.

Auch bei der Heizungsanlage 1 gemäß den Figuren 3 und 4 sind wieder der Sammler 3, der Verteiler 4 und die hydraulische Weiche 5 zu einer vorgefertigten und transportablen und dadurch leicht und schnell zu installierenden Bau- und Montageeinheit 10 zusammengefaßt. Durch die Verwendung der Baueinheit 10 ergibt sich auch bei dieser besonderen Anordnung der Heizkessel 2 ein sehr übersichtliches und klares Anlagenbild.

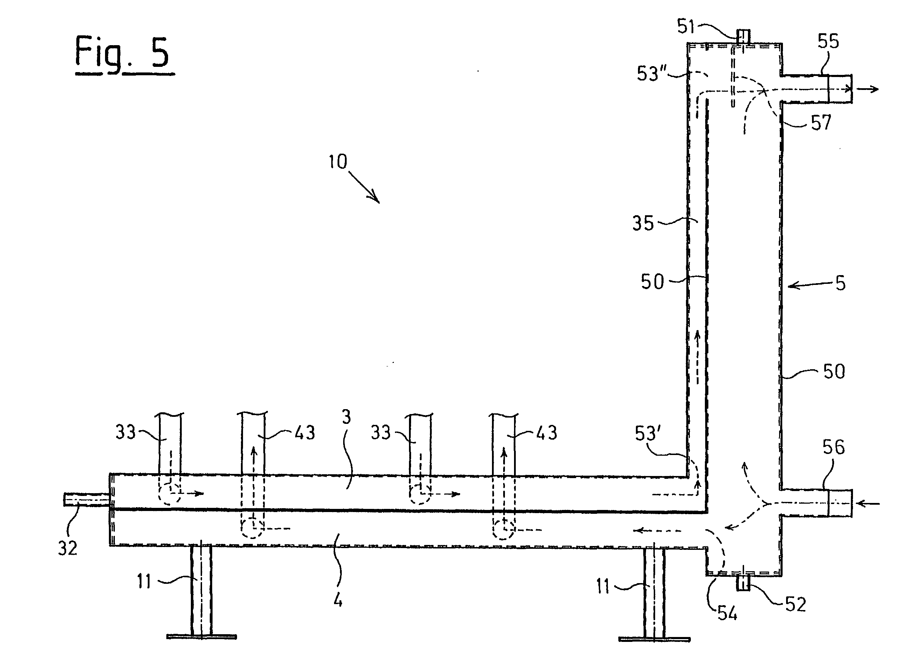

Figur 5 der Zeichnung schließlich zeigt eine Baueinheit 10, bestehend aus Sammler 3, Verteiler 4 und hydraulischer Weiche 5, in einer gegenüber den Figuren 1 bis 4 geänderten Ausführung. Die Änderung betrifft die Ausführung der Verbindungsleitung 35 vom weichenseitigen Ende des Sammlers 3 zum oberen Bereich der Weiche 5. Bei der Ausführung gemäß Figur 5 ist diese Verbindungsleitung 35 als integrierter Bestandteil der hydraulischen Weiche 5 ausgebildet. Hierzu ist auf die dem Sammler 3 und dem Verteiler 4 zugewandte Seite des Gehäuses 50 der Weiche 5 ein U-Profil dicht aufgeschweißt, so daß dessen Inneres die gewünschte Verbindungsleitung 35 für die Strömungsverbindung vom weichenseitigen Ende des Sammlers 3 zum oberen Bereich der hydraulischen Weiche 5 bildet.

Die Strömungsverbindung zwischen dem Sammler 3 und der Verbindungsleitung 35 wird durch eine Durchbrechung 53' gebildet, die unmittelbar vor der hydraulischen Weiche 5 oberseitig in der Wandung des Sammlers 3 vorgesehen ist. Die Strömungsverbindung vom oberen Ende der Verbindungsleitung 35 in das Innere der Weiche 5 wird durch eine weitere Durchbrechung 53'' gebildet, die in der der Verbindungsleitung 35 zugewandten Seite des Gehäuses 50 der Weiche 5 angebracht ist. Das nach oben weisende Stirnende des die Verbindungsleitung 35 bildende U-Profils ist dicht verschlossen.

Weiterhin ist bei der Baueinheit 10 gemäß Figur 5 im Inneren des Gehäuses 50 der Weiche 5 in deren oberem Teil im Abstand vor der Durchbrechung 53' ein Prallelement 57 vorgesehen, das als Lochblech oder Gitter ausgeführt ist. Das Prallelement 57 bewirkt eine Verminderung der Strömungsgeschwindigkeit des in die hydraulische Weiche einströmenden Heizwassers und begünstigt eine Abscheidung von Luftblasen. Diese Luft kann sich im oberen Endbereich der Weiche 5 sammeln, ohne daß sie wieder in den Kreislauf gelangt. Eine Entlüftung kann manuell oder automatisch über ein Entlüftungsventil erfolgen, das in den kleinen Stutzen 51 am oberen Stirnende der Weiche 5 einbaubar ist.

Der untere Endbereich der hydraulischen Weiche 5 bildet einen Fang- und Sammelraum für im Heizwasser mitgeführten Schlamm und Schmutz. Durch einen Versatz des Heizkreis-Rücklaufs 56 relativ zum Rücklauf-Verteiler 4 nach oben wird eine Strömungsumlenkung des aus dem Heizkreis in die Weiche 5 einströmenden Heizwassers erzwungen, die eine Schlammabscheidung fördert. Ein von Zeit zu Zeit nötiger Schlammabzug kann durch einen in den kleinen Stutzen 52 an unteren Stirnende der Weiche 5 eingebauten Abschlammhahn erfolgen.

In ihren übrigen Teilen entspricht die Baueinheit 10 nach Figur 5 den Ausführungen gemäß den Figuren 1 bis 4. Hinsichtlich der weiteren in Figur 5 dargestellten Einzelteile und Bezugsziffern wird auf die Beschreibung der Figuren 1 bis 4 verwiesen.

## Patentansprüche

1. Kaskaden-Heizungsanlage (1) mit zwei oder mehr Heizkesseln (2), insbesondere hängend montierten Brennwertkesseln, und mit mindestens einem von den Kesseln (2) gespeisten Heizkreis, wobei die Heizungsanlage (1) je einen im wesentlichen horizontal verlaufenden Kesselvorlauf-Sammler (3) und Kesselrücklauf-Verteiler (4) sowie weiterhin eine hydraulische Weiche (5) umfaßt, die einerseits über den Kesselvorlauf-Sammler (3) mit den Vorläufen (23) und über den Kesselrücklauf-Verteiler (4) mit den Rückläufen (24) aller Heizkessel (2) und andererseits mit zumindest je einem Heizkreisvorlauf (55) und Heizkreisrücklauf (56) verbunden ist,
**dadurch gekennzeichnet,**
- **daß** der Kesselvorlauf-Sammler (3) und der Kesselrücklauf-Verteiler (4) unmittelbar über- oder neben- oder ineinander unter den Heizkesseln (2) angeordnet sind,
- **daß** der Sammler (3) und der Verteiler (4) jeweils mit vorbereiteten, für eine Gruppe aus zwei oder mehr Heizkesseln (2) angepaßt plazierten und ausgerichteten Anschlußstutzen (33, 44) zum Anschluß der Heizkesselvorläufe (23) und der Heizkesselrückläufe (24) ausgeführt sind,
- **daß** die Anschlußstutzen (33, 44) in Form von nach oben weisenden geraden Rohrabschnitten und/oder in Form von zunächst horizontal, vorzugsweise nach hinten, und dann nach oben verlaufenden Rohrbögen ausgeführt sind und
- **daß** der Sammler (3) und der Verteiler (4) fest mit der hydraulischen Weiche (5) verbunden sind und mit dieser eine vorgefertigte, transportable Bau- und Montageeinheit (10) bilden.

2. Kaskaden-Heizungsanlage nach Anspruch 1, **dadurch gekennzeichnet, daß** der Sammler (3) über dem Verteiler (4) liegt und daß Sammler (3) und Verteiler (4) an ihrem einen Stirnende mit der im wesentlichen vertikal ausgerichteten hydraulischen Weiche (5) nahe deren unterem Ende mechanisch fest verbunden sind.

3. Kaskaden-Heizungsanlage nach Anspruch 2, **dadurch gekennzeichnet, daß** der Sammler (3) an oder nahe seinem weichenseitigen Ende über eine feste Verbindungsleitung (35) mit dem oberen Bereich der hydraulischen Weiche (5) in Strömungsverbindung steht und daß der Verteiler (4) an seinem weichenseitigen Ende über eine Durchbrechung in der ihm zugewandten Wandung der hydraulischen Weiche (5) mit deren unterem Bereich in unmittelbarer Strömungsverbindung steht.

4. Kaskaden-Heizungsanlage nach Anspruch 3, **dadurch gekennzeichnet, daß** die feste Verbindungsleitung (35) als integrierter Bestandteil der hydraulischen Weiche (5) ausgeführt ist.

5. Kaskaden-Heizungsanlage nach Anspruch 4, **dadurch gekennzeichnet, daß** die Verbindungsleitung (35) durch ein mit der dem Sammler (3) zugewandten Seite der Weiche (5) dicht verbundenes, bevorzugt verschweißtes, Rechteckrohr oder U-Profil gebildet ist, dessen Inneres unten über eine Durchbrechung (53') mit dem Sammler (3) und oben über eine weitere Durchbrechung (53'') mit dem oberen Bereich der hydraulischen Weiche (5) in Strömungsverbindung steht.

6. Kaskaden-Heizungsanlage nach einem der vorhergehenden Ansprüche, **dadurch gekennzeichnet, daß** der an die hydraulische Weiche (5) angeschlossene Heizkreis-Vorlauf (55) in einem Abstand zwischen etwa 5 und 15 % der Gesamthöhe der hydraulischen Weiche (5) von deren oberem Ende angeordnet ist und daß der an die hydraulische Weiche (5) angeschlossene Heizkreis-Rücklauf (56) in einem Abstand von etwa 5 bis 20 % der Gesamthöhe der hydraulischen Weiche (5) von deren unterem Ende beabstandet ist.

7. Kaskaden-Heizungsanlage nach einem der vorhergehenden Ansprüche, **dadurch gekennzeichnet, daß** zwischen die Sammler- und Verteiler-Anschlußstutzen (33, 44) einerseits und die Vor- und Rückläufe (23, 24) der Heizkessel (2) andererseits zum Höhenausgleich gerade Rohrstücke, vorzugsweise mit Schneidringverschraubungen an ihren Enden, einfügbar sind.

8. Kaskaden-Heizungsanlage nach einem der vorhergehenden Ansprüche, **dadurch gekennzeichnet, daß** die Heizkessel (2) Seite an Seite nebeneinander angeordnet sind und die vertikalen Abschnitte der Anschlußstutzen (33, 44) im wesentlichen in einer gemeinsamen vertikalen Ebene liegen.

9. Kaskaden-Heizungsanlage nach einem der Ansprüche 1 bis 7, **dadurch gekennzeichnet, daß** ein oder mehrere Paare von Heizkesseln (2) Rücken an Rücken angeordnet und an einem gemeinsamen Träger (81) gehaltert sind und die vertikalen Abschnitte der Anschlußstutzen (33, 44) in zwei horizontal voneinander beabstandeten vertikalen Ebenen liegen.

10. Kaskaden-Heizungsanlage nach einem der vorhergehenden Ansprüche, **dadurch gekennzeichnet, daß** die aus Sammler (3), Verteiler (4) und hydraulischer Weiche (5) bestehende Bau- und Montageeinheit (10) mit auf einem Boden (6) aufstellbaren Füßen (11) und/oder mit an einer Wand (7) oder Decke (8) anbringbaren Trägern (81) oder mit vorbereiteten Verbindungselementen dafür ausgestattet ist, wobei vorzugsweise die Füße (11) und/oder die Träger (81) höhen- und/ oder längenverstellbar sind.

## Claims

1. Cascade heating system (1) comprising two or more heating boilers (2), particularly wall-mounted or suspended condensing boilers, and further comprising at least one heating circuit that is supplied from the boilers (2), wherein the heating system (1) comprises one boiler supply collector (3) and one boiler return manifold (4), each essentially aligned in a horizontal direction, and further comprising a hydraulic switch (5) that is, on the one hand, connected to the supply piping (23) of all heating boilers (2) via the boiler supply collector (3) and to the return piping (24) of all heating boilers (2) via the boiler return manifold (4) and, on the other hand, to at least one heating circuit supply pipe (55) and one heating circuit return pipe (56),
**characterized in that**
- the boiler supply collector (3) and the boiler return manifold (4) are arranged underneath the heating boilers (2) directly above or next to or in each other,
- the collector (3) and the manifold (4) are each provided with prepared pipe connections (33, 44) that are positioned and aligned to fit to a group of two or more heating boilers (2) and are intended to connect the heating boiler supply pipes (23) and the heating boiler return pipes (24),
- the pipe connections (33, 44) are designed in the form of straight pipe sections that are pointing upwards and/or in the form of pipe elbows that are running first in a horizontal, preferrably backward, direction and then in an upward direction, and
- the collector (3) and the manifold (4) are connected to the hydraulic switch (5) in a non-removable manner and, together with this hydraulic switch (5), form a prefabricated transportable assembly (10).

2. Cascade heating system according to Claim 1, **characterized in that** the collector (3) is arranged above the manifold (4) and that both collector (3) and manifold (4), at their one front end, are connected to the hydraulic switch (5) at a point near the latter's lower end in a mechanically non-removable manner, with the hydraulic switch (5) being aligned in an essentially vertical direction.

3. Cascade heating system according to Claim 2, **characterized in that** the collector (3), at or near to that of its ends that is located on the side of the switch, is in flow contact with the upper region of the hydraulic switch (5) via a fixed connection line (35) and that the manifold (4), at that of its ends that is located on the side of the switch, is in direct flow contact with the lower region of the hydraulic switch (5) via a breakthrough **in that** wall of the hydraulic switch (5) that is facing it.

4. Cascade heating system according to Claim 3, **characterized in that** the fixed connection line (35) is designed as an integral part of the hydraulic switch (5).

5. Cascade heating system according to Claim 4, **characterized in that** the connection line (35) is formed by a rectangular tube or U-section that is tightly connected, preferrably welded, to that side of the hydraulic switch (5) that is facing the collector (3), with the interior region of the rectangular tube or U-section being in flow contact with the collector (3) via a breakthrough (53') at its bottom and with the upper region of the hydraulic switch (5) via a further breakthrough (53'') at its top.

6. Cascade heating system according to anyone of the preceding claims, **characterized in that** the heating circuit supply pipe (55) that is connected to the hydraulic switch (5) is arranged at a distance of approximately 5 to 15 percent of the overall height of the hydraulic switch (5) from the latter's upper end and that the heating circuit return pipe (56) that is connected to the hydraulic switch (5) is arranged at a distance of approximately 5 to 20 percent of the overall height of the hydraulic switch (5) from the latter's lower end.

7. Cascade heating system according to anyone of the preceding claims, **characterized in that** straight pipe pieces that are preferrably provided with compression joints at their ends and are intended for height adjustment can be fitted between the collector and manifold pipe connections (33, 44) on the one hand and the supply and return pipes (23, 24) of the heating boilers (2) on the other hand.

8. Cascade heating system according to anyone of the preceding claims, **characterized in that** the heating boilers (2) are arranged side by side and next to each other and that the vertical sections of the pipe connections (33, 44) are, in essence, aligned in a common vertical plane.

9. Cascade heating system according to anyone of the Claims 1 through 7, **characterized in that** one or more pairs of heating boilers (2) are arranged back to back and are mounted to a common holder (81) and that the vertical sections of the pipe connections (33, 44) are aligned in two vertical planes that are spaced apart from each other in horizontal direction.

10. Cascade heating system according to anyone of the preceding claims, **characterized in that** the assembly (10) that consists of collector (3), manifold (4) and hydraulic switch (5) is equipped with feet (11) to be set up on a floor (6) and/or with holders (81) to be attached to a wall (7) or a ceiling (8) or with connection elements prepared to this end, wherein the feet (11) and/or holders (81) are preferrably adjustable in height and/or length.

## Revendications

1. Installation de chauffage en cascade (1) présentant deux ou plusieurs chaudières (2), notamment des chaudières à gaz de condensation installées en suspension, et présentant au moins un circuit calorifique alimenté par les chaudières (2), l'installation de chauffage (1) comprenant à chaque fois un collecteur (3) de canalisations montantes de chaudière, courant en général de façon horizontale, et un répartiteur (4) de canalisations descendantes de chaudière, ainsi, par ailleurs, qu'un filtre séparateur hydraulique (5), lequel filtre est raccordé d'une part au moyen du collecteur (3) de canalisations montantes de la chaudière à l'aide des canalisations montantes (23) et au moyen du répartiteur de canalisations descendantes de chaudière (4) avec les canalisations descendantes (24) de l'ensemble de la chaudière (2) et d'autre part, avec au moins à chaque fois une canalisation montante du circuit calorifique (55) et une canalisation descendante du circuit calorifique (56),
**caractérisée**
- **en ce que** le collecteur de canalisations montantes de la chaudière (3) et le répartiteur des canalisations descendantes de la chaudière (4) sont agencés sous la chaudière (2) l'un sur l'autre, l'un à côté de l'autre ou l'un dans l'autre,
- **en ce que** le collecteur (3) et le répartiteur (4) sont réalisés à chaque fois à l'aide de tubulures de raccordement (33, 34) agencées, préparées et placées de manière à s'adapter à un groupe composé de deux ou plusieurs chaudières (2) en vue de raccorder les canalisations montantes de la chaudière (23) et les canalisations descendantes de la chaudière (24),
- **en ce que** les tubulures de raccordement (33, 44) sont réalisées sous forme de section de tuyau droite se présentant vers le haut et / ou sous la forme de coude de tuyau courant d'abord horizontalement, de préférence vers l'arrière, et ensuite vers le haut, et
- **en ce que** le collecteur (3) et le répartiteur (4) sont reliés fermement avec le filtre de séparation hydraulique (5), et qu'ils forment avec celui-ci une unité de montage et une unité modulaire, transportables et préfinies.

2. Installation de chauffage en cascade selon la revendication 1, **caractérisée en ce que** le collecteur (3) se situe sur le répartiteur (4) et **en ce que** le collecteur (3) et le répartiteur (4) sont reliés de façon ferme et mécanique au niveau de l'une de leurs extrémités frontales à l'aide du filtre séparateur (5) hydraulique installé en général de façon verticale à proximité de son extrémité inférieure.

3. Installation de chauffage en cascade selon la revendication 2, **caractérisée en ce que** le collecteur (3) se trouve au niveau ou à proximité de son extrémité côté filtre séparateur sur une conduite de raccordement fixe (35) comprenant la partie supérieure du filtre séparateur (5) hydraulique dans la conduite d'écoulement, et **en ce que** le répartiteur au niveau de son extrémité côté filtre séparateur se trouve sur une perforation dans la paroi orientée vers celui-ci du filtre séparateur (5) hydraulique comprenant sa partie inférieure dont la partie supérieure se trouve dans la conduite d'écoulement immédiate.

4. Installation de chauffage en cascade selon la revendication 3, **caractérisée en ce que** la conduite de raccordement fixe (35) est réalisée sous la forme d'un composant intégré du filtre séparateur (5) hydraulique.

5. Installation de chauffage en cascade selon la revendication 4, **caractérisée en ce que** la conduite de raccordement (35) est formée par un profil en U ou un tuyau à angle droit, de préférence soudé, relié de manière étanche avec la partie alimentant le collecteur (3) du filtre séparateur (5), tuyau dont l'intérieur se trouve dans sa partie inférieure sur une perforation (53') comprenant le collecteur (3) et dans sa partie supérieure sur une autre perforation (53") comprenant la partie supérieure du filtre séparateur (5) hydraulique au sein de la conduite d'écoulement.

6. Installation de chauffage en cascade selon l'une quelconque des revendications précédentes, **caractérisée en ce que** la canalisation montante du circuit calorifique (55) raccordée au niveau du filtre séparateur (5) hydraulique est agencée selon une distance allant d'environ 5 à 15 % de la hauteur totale du filtre séparateur hydraulique (5) de sa partie supérieure, et **en ce que** la canalisation descendante du circuit calorifique (56) reliée au niveau du filtre séparateur hydraulique (5) se trouve à une distance d'environ 5 à 20 % de la hauteur totale du séparateur hydraulique (5) de sa partie inférieure.

7. Installation de chauffage en cascade selon l'une quelconque des revendications précédentes, **caractérisée en ce que** l'on peut introduire entre les conduites de raccordement du répartiteur et du collecteur (33, 44) d'une part, et les canalisations montantes et descendantes (23, 24) de la chaudière (2) d'autre part, des raccords de tuyau droits de façon à compenser la hauteur, lesquels présentant de préférence des olives de raccord de tube à leurs extrémités.

8. Installation de chauffage en cascade selon l'une quelconque des revendications précédentes, **caractérisée en ce que** les chaudières (2) sont agencées côte à côte, et **en ce que** les sections verticales des conduites de raccordement (33, 44) se trouvent principalement sur un plan commun vertical.

9. Installation de chauffage en cascade selon l'une quelconque des revendications 1 à 7, **caractérisée en ce qu'**une ou plusieurs paires de chaudières (2) sont agencées dos à dos et sont maintenues à l'aide d'un support commun (81), et **en ce que** les sections verticales des conduites de raccordement (33, 44) se trouvent sur deux niveaux verticaux, distantes l'une de l'autre de façon horizontale.

10. Installation de chauffage en cascade selon l'une quelconque des revendications précédentes, **caractérisée en ce que** l'unité de montage et l'unité modulaire se composant d'un collecteur (3), d'un répartiteur (4) et d'un filtre séparateur hydraulique (5), sont équipées de pieds (11) réglables sur un socle (6) et / ou avec des supports (81) pouvant être apposés au niveau d'une paroi (7) ou d'un couvercle (8) ou avec des éléments de raccordement prévus à cet effet, les pieds (11) et / ou les supports (81) étant de préférence réglables en longueur et / ou en hauteur.
